# EUROPEAN PATENT APPLICATION

(11) **EP 3 926 302 A1**
(43) Date of publication of application: **22.12.2021**
(21) Application number: 20020282.8
(22) Date of filing: 18.06.2020
(51) Int. Cl.: G01C 21/34

(54) **METHOD AND APPARATUS FOR PLANNING A RETURN TRIP BETWEEN A GIVEN STARTING POINT AND A GIVEN DESTINATION**

(71) Applicant: Dr. Ing. h.c. F. Porsche AG, 70435 Stuttgart (DE)
(72) Inventor: KNAPP, Sebastian, 71134 Aidlingen (DE); SANDERS, Peter, 76229 Karlsruhe (DE); ZÜNDORF, Tobias, 76131 Karlsruhe (DE)

(57) **Abstract**

The invention provides a method of planning a return trip between a given starting point (s) and a given destination characterized in that, in a first step of the method, outward routes from the starting point (s) to the destination (t) are computed, in a second step of the method, inward routes from the destination (t) to the starting point (s) are computed, and, in a third step of the method, a first leg is selected among the outward routes and a second leg is selected among the inward routes such that a concatenation of the first leg and second leg maximizes a given quality criterion and totals a desired mileage.

The invention further provides a corresponding data processing apparatus, a corresponding computer program, and a corresponding medium.

## Description

The present invention pertains to a method of planning a return trip between a given starting point and a given destination. The invention further relates to a corresponding data processing apparatus, a corresponding computer program, and a corresponding medium.

### Background art

Computing optimal routes in road networks has many applications such as navigation devices, logistics, traffic simulation, or web-based route planning. In car navigation systems, the metric optimized is usually the travel time required for a trip being planned.

For practical performance on large road networks, preprocessing techniques that augment the network with auxiliary data in an offline phase have proven useful. To this end, customizable contraction hierarchies using nested dissection orders have been suggested in DIBBELT, Julian; STRASSER, Ben; WAGNER, Dorothea. Customizable contraction hierarchies. In: International Symposium on Experimental Algorithms. Springer, Cham, 2014. pp. 271-282.

US2013046456A, US2017336221A, US2019293443A, US2019383621A, and WO09062458A1 each pertain to a vehicle navigation system with multiple algorithmic routing options.

### Disclosure of the invention

The invention is based on a scenario where a user plans a road trip for the weekend including a visit to his or her favorite restaurant, the road trip preferably comprising a pleasant way out as well as way back and taking a specific travel time or totaling a desired mileage.

To efficiently compute such road trip, the invention provides a method of planning a return trip between a given starting point and a given destination, a corresponding data processing apparatus, a corresponding computer program, and a corresponding medium as per the independent claims.

Due to the countless possible combinations of outward and return journeys, this approach bears the advantage of providing more aesthetically pleasing results than conventional variants while optionally permitting the user to specify an interim destination. Even where that destination is chosen randomly, the proposed algorithm may still be considered superior to conventional approaches, which do not allow for the passing of a destination.

Embodiments of the invention are set out in the dependent claims. For instance, in a preliminary step, each street or section may be assigned a percentage measure of attractiveness ranging from 0 % (poor) to 100 % (high). The overall quality criterion to be maximized for a contemplated road trip is then defined as the distance-weighted average of all sections along the trip.

In such embodiment, the measure of attractiveness is arbitrary and may be based, inter alia, on curvature, scenic appeal, points of interest, levelness or low uphill grade, and freedom from overlap among route sections. For instance, to identify beautiful, winding routes, the curve radius has been considered in relation to the square of the maximum permitted speed. This value is also known as the maximum possible lateral acceleration. In addition, surroundings - such as town, meadow, or forest - may be included in the evaluation.

In a further preliminary step, a contraction hierarchy of the underlying road network may be precomputed by means of nested dissection orders, the routes subsequently being computed using said contraction hierarchy. This runtime optimization variant allows for flexible balancing between quality and runtime.

### Brief description of drawings

- Figure 1: shows a first step.
- Figure 2: shows a second step.
- Figure 3: shows a third step.
- Figure 4: shows a first sub-step of the first step.
- Figure 5: shows a second sub-step of the first step.
- Figure 6: shows a third sub-step of the first step.
- Figure 7: shows a first sub-step of the third step.
- Figure 8: shows a second sub-step of the third step.
- Figure 9: shows a third sub-step of the third step.

### Embodiment of the invention

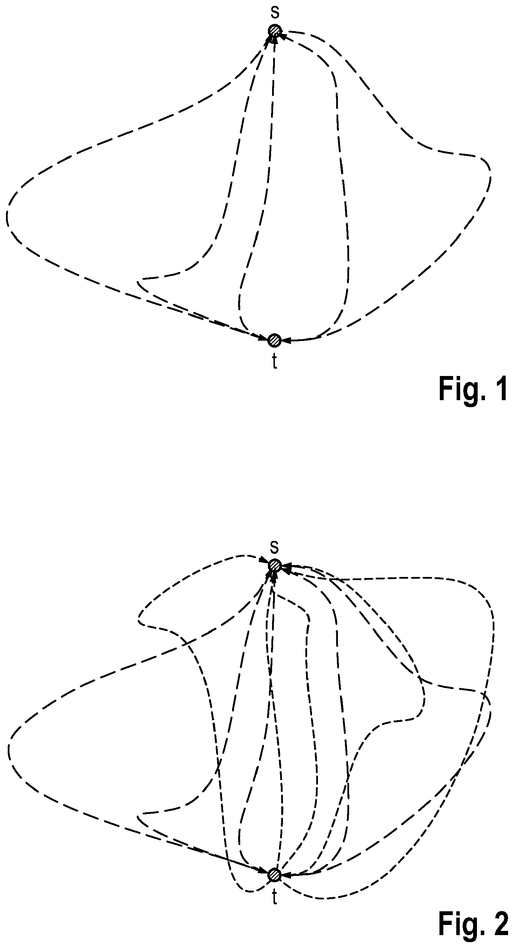

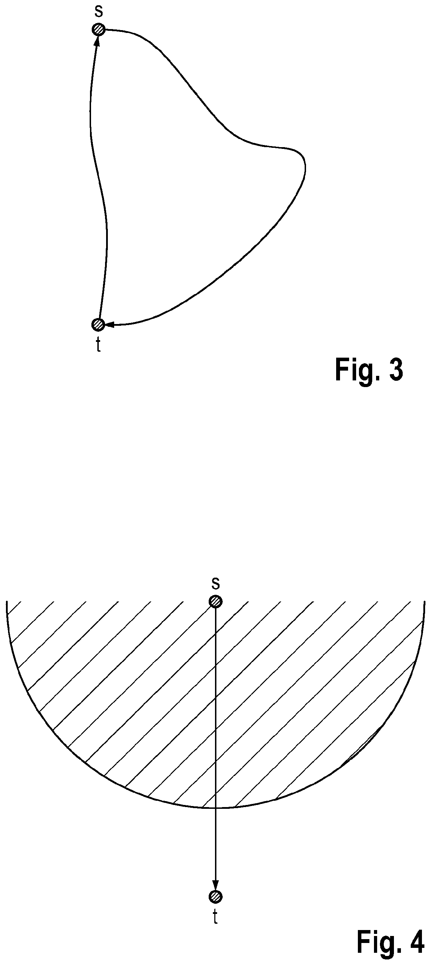

In synopsis, Figs. 1 to 3 illustrate a preferred method of planning a return trip between a given starting point (s) and a given destination (t). To this end, in a first step (Fig. 1), outward routes from the starting point (s) to the destination (t) are computed. In a second step (Fig. 2), inward routes from the destination (t) to the starting point (s) are computed. In a third and final step (Fig. 3), a first leg is selected among the outward routes and a second leg is selected among the inward routes such that a concatenation of the first leg and second leg maximizes a given quality criterion and totals a desired mileage.

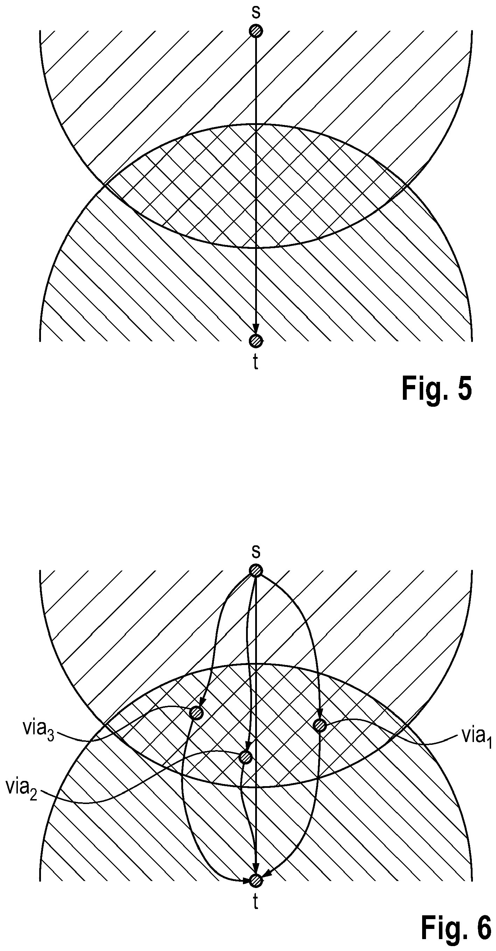

With reference to Figs. 4 to 6, the first step will now be elucidated in further detail. In a first sub-step (Fig. 4), waypoints within a given distance from the starting point (s) are identified. In a corresponding second sub-step (Fig. 5), waypoints within a given distance from the destination (t) are identified. Fig. 6 depicts the intersection of both subsets which, in the present example, contains three waypoints (via₁, via₂, via₃), each of which defines a candidate outward route.

As the skilled person will appreciate, this procedure may, mutatis mutandis, be applied to the second step, that is, the computation of inward routes.

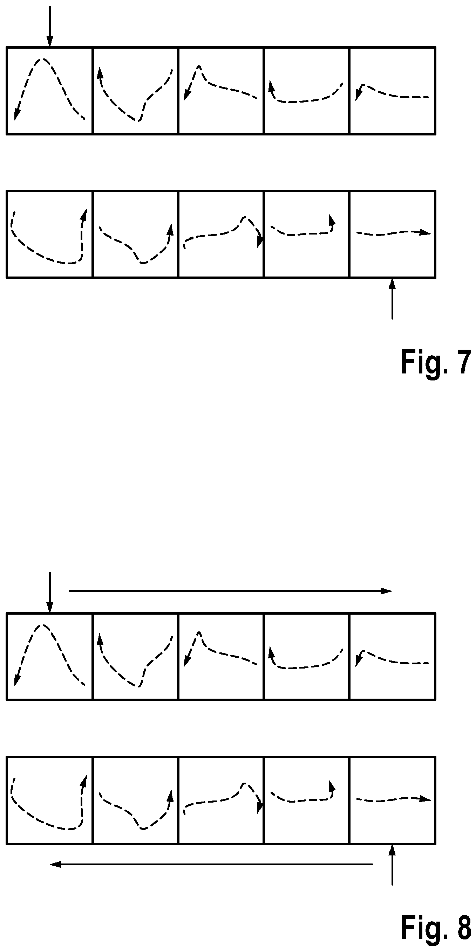

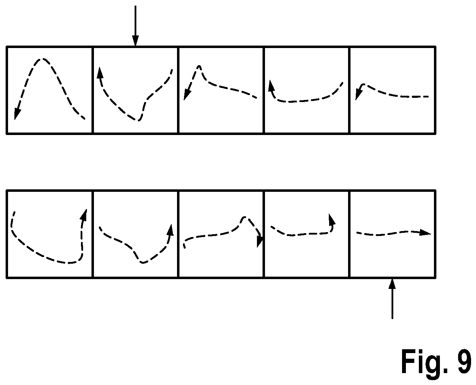

With reference to Figs. 7 to 9, the third step will now be elucidated in further detail. In a first sub-step (Fig. 7), each the outward and inward routes are compiled into a list sorted by mileage of the respective routes. In a second sub-step (Fig. 8), candidate combinations totaling the desired mileage are identified by traversing the lists in opposite directions. Finally, in a third sub-step (Fig. 9), the first and second legs of the trip are selected from the identified combinations according to the given quality criterion.

Variations on this basic algorithm are conceivable without departing from the scope of the invention. For instance, to avoid overlap among route sections along the same trip, the measure of attractiveness for a respective section may be reduced when being reconsidered for the inward route. In such variant, once the list of outward routes has been compiled, each route may be subdivided into an arbitrary number of intervals, each interval comprising the same number of elements. Thereupon, the most pleasing outward journey for each interval would be selected. Upon computing a suitable inward route for each of those outward routes, duplicate sections may be degraded in terms of attractiveness.

Similarly, an embodiment of the invention could be limited to circular trips. To this end, an outward and inward route would only be combined where both routes traverse the road network on opposite sides of a straight line passing through both the starting point (s) and destination (t). Herein, the distance between the starting point (s) and the waypoint should approximate that between the waypoint and destination (t).

## Claims

1. Method of planning a return trip between a given starting point (s) and a given destination (t),
**characterized in that**
- in a first step of the method, outward routes from the starting point (s) to the destination (t) are computed,
- in a second step of the method, inward routes from the destination (t) to the starting point (s) are computed, and,
- in a third step of the method, a first leg is selected among the outward routes and a second leg is selected among the inward routes such that a concatenation of the first leg and second leg maximizes a given quality criterion and totals a desired mileage.

2. Method as per claim 1,
**characterized in that**, in the first step,
- waypoints (via₁, via₂, via₃) within a given distance from both the starting point (s) and the destination (t) are identified, each of said waypoints (via₁, via₂, via₃) defining one of the outward routes.

3. Method as per claim 1 or 2,
**characterized in that**, in the third step,
- each the outward and inward routes are compiled into a list sorted by the mileage of the respective routes,
- candidate combinations totaling the desired mileage are identified by traversing the lists in opposite directions, and
- the legs are selected from the identified combinations according to the given quality criterion.

4. Method as per any of claims 1 through 3,
**characterized in that**
- in a preliminary step, streets or route sections are assigned a measure of attractiveness and
- the quality criterion is defined as an average of the measure along the trip.

5. Method as per claim 4,
**characterized in that**
- the average is a weighted arithmetic mean, wherein the mileage of the streets or route sections serves as weight.

6. Method as per claim 4 or 5,
**characterized in that**
the measure of attractiveness is based on at least one of the following:
- curvature,
- scenic appeal,
- points of interest,
- levelness or low uphill grade, or
- freedom from overlap.

7. Method as per any of claims 1 through 6,
**characterized in that**
- in a further preliminary step, a contraction hierarchy of a given road network is precomputed by means of nested dissection orders and
- the routes are computed using the contraction hierarchy.

8. Data processing apparatus having means for carrying out the method as per any of claims 1 through 7.

9. Computer program adapted to perform the method as per any of claims 1 through 7.

10. Computer-readable medium having stored thereon the program as per claim 9.
